(19) Europäisches Patentamt
European Patent Office
Office européen des brevets

(11) EP 4 738 642 A1

(12) **EUROPEAN PATENT APPLICATION**
published in accordance with Art. 153(4) EPC

(43) Date of publication:
06.05.2026 Bulletin 2026/19

(51) International Patent Classification (IPC):
H02J 7/00 (2026.01)          H02J 9/02 (2006.01)
H01M 10/42 (2006.01)

(21) Application number: 25774899.6

(22) Date of filing: 10.03.2025

(52) Cooperative Patent Classification (CPC):
H01M 10/42; H02J 7/00; H02J 9/02

(86) International application number:
PCT/KR2025/003128

(87) International publication number:
WO 2025/198237 (25.09.2025 Gazette 2025/39)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 20.03.2024 KR 20240038407
28.02.2025 KR 20250026942

(71) Applicant: LG Energy Solution, Ltd.
Seoul 07335 (KR)

(72) Inventors:
• KIM, Seung-Choo
  Daejeon 34122 (KR)
• KIM, Myung-Hwan
  Daejeon 34122 (KR)

(74) Representative: Goddar, Heinz J.
Boehmert & Boehmert
Anwaltspartnerschaft mbB
Pettenkoferstrasse 22
80336 München (DE)

(54) **SYSTEM CONTROL APPARATUS AND SYSTEM CONTROL METHOD FOR BATTERY CHARGING-DISCHARGING SYSTEM**

(57)     A system control apparatus and a system control method for a battery charging/discharging system are provided. The battery charging/discharging system includes a main power source, a charging/discharging facility and an auxiliary power source. The system control apparatus includes a monitoring circuit to monitor whether a failure of the main power source occurs; and a controller to generate an electric energy profile of the charging/discharging facility by applying a mathematical operation to first to m-th power profiles based on operation information of first to m-th chargers/dischargers included in the charging/discharging facility. m is a natural number of 2 or greater. The controller is configured to determine whether it is necessary to stop at least one of the first to m-th chargers/dischargers by comparing a first electric energy of the electric energy profile with a second electric energy of the auxiliary power source, when the failure of the main power source occurs.

FIG. 1

Battery charging/discharging system — 10
- Main power source — 100
- Charging/discharging facility — 200
- Auxiliary power source — 300
- System control apparatus — 400
  - Monitoring circuit — 410
  - Controller — 420

**Description**

TECHNICAL FIELD

The present disclosure relates to a control technology for improving the efficiency of a charging/discharging process performed by a battery charging/discharging system.

This application is based on and claims priority to Korean Patent Application No. 10-2024-0038407 filed on March 20, 2024 and Korean Patent Application No. 10-2025-0026942 filed on February 28, 2025 in the Republic of Korea, the disclosures of which are incorporated herein by reference.

BACKGROUND

Recently, there has been a rapid increase in the demand for portable electronic products such as laptop computers, video cameras and mobile phones, and with the extensive development of electric vehicles, accumulators for energy storage, robots and satellites, many studies are being made on high performance batteries that can be repeatedly charged and discharged.

Batteries on the market now include nickel-cadmium batteries, nickel-hydrogen batteries, nickel-zinc batteries, lithium batteries and the like, and among them, lithium batteries have little or no memory effect, and thus they are gaining more attention than nickel-based batteries for their advantages that recharging can be done whenever it is convenient, the self-discharge rate is very low and the energy density is high.

Batteries are manufactured as finished products by performing an assembly process and a charging/discharging process in a sequential order. In the assembly process, a stack of a positive electrode, a negative electrode and a separator is placed in an outer packaging together with an electrolyte, followed by sealing. In the charging/discharging process, a predetermined charging/discharging procedure is performed on the batteries having undergone the assembly process. When the charging/discharging process is performed on the batteries, solid electrolyte interphase (SEI) is formed on the negative electrode surface, establishing the intended electrical properties.

The batteries having undergone the assembly process are sequentially transported to a battery charging/-discharging system, and the battery charging/discharging system sequentially performs the charging/discharging process on the batteries in a first-in, first-out manner.

The battery charging/discharging system includes a charging/discharging facility provided to take responsibility for charging and discharging for each of a plurality of battery boxes and a main power source provided to supply direct current power to the charging/discharging facility.

In the event of failure of the main power source, there is a disruption in the supply of power from the main power source to the charging/discharging facility and a failure in power regeneration from the charging/discharging facility to the main power source. As a result, at least one charger/discharger cannot faithfully perform the charging or discharging operation until the failure of the main power source is resolved, resulting in degradation of the battery formation results, and in worse cases, the charging/discharging process for all the battery boxes may be stopped.

DISCLOSURE

Technical Problem

The present disclosure is designed to solve the above-described problems, and therefore the present disclosure is directed to providing an apparatus and method in which when a failure of a main power source of a battery charging/discharging system occurs, among a plurality of chargers/dischargers included in a charging/discharging facility, at least one charger/discharger operating in a charging mode or a discharging mode is stopped or at least one charger/discharger at rest is prohibited from operating, thereby preventing a situation in which a charging/discharging process for all battery boxes is completely stopped.

These and other objectives and advantages of the present disclosure may be understood from the following description and will become apparent from the embodiments of the present disclosure. Also, it will be easily understood that the objectives and advantages of the present disclosure may be realized by the means set forth in the appended claims and a combination thereof.

Technical Solution

A system control apparatus according to an aspect of the present disclosure is designed for a battery charging/discharging system including a main power source, a charging/discharging facility and an auxiliary power source. The system control apparatus includes a monitoring circuit to monitor whether a failure of the main power source occurs; and a controller to generate an electric energy profile of the charging/discharging facility by applying a mathematical operation to first to m-th power profiles based on operation information of first to m-th chargers/dischargers included in the charging/discharging facility. m is a natural number of 2 or greater. The controller is configured to determine whether it is necessary to stop at least one of the first to m-th chargers/dischargers by comparing a first electric energy of the electric energy profile with a second electric energy of the auxiliary power source, when the failure of the main power source occurs.

The controller may be configured to determine the first to m-th power profiles by applying operation starting times of the first to m-th chargers/dischargers to a reference power profile, respectively.

The controller may be configured to determine a total power profile of the charging/discharging facility by applying a first matrix operation to the first to m-th power profiles. The controller may be configured to generate the electric energy profile by applying a second matrix operation to the total power profile.

The controller may be configured to determine the first electric energy to be equal to expected energy consumption of the charging/discharging facility and the second electric energy to be equal to an available output electric energy of the auxiliary power source, when the charging/discharging facility is in a charge dominant state at a time when the failure of the main power source occurred.

The controller may be configured to determine, from the electric energy profile, a reference electric energy corresponding to the time when the failure occurred and a maximum electric energy corresponding to a time that will come after the failure occurred, and

to determine the expected energy consumption to be equal to a difference between the reference electric energy and the maximum electric energy.

The controller may be configured to determine that it is necessary to stop at least one of the first to m-th chargers/dischargers, when the charging/discharging facility is in the charge dominant state at the time when the failure of the main power source occurred and the first electric energy is larger than the second electric energy.

The controller may be configured to select at least one remaining electric energy value whose sum by adding the plurality of remaining electric energy values associated with a plurality of chargers/dischargers having a remaining charging period among the first to m-th chargers/dischargers one by one in a descending order is equal to or larger than a deficit electric energy value, and determine that it is necessary to stop the charger/discharger associated with each of the selected remaining electric energy values. The remaining electric energy value may indicate an electric energy that will be consumed for a remaining time until a total electric energy of the charging/discharging facility reaches a maximum value. The deficit electric energy value may indicate a difference between the first electric energy and the second electric energy.

The controller may be configured to determine the first electric energy to be equal to an electric energy that the charging/discharging facility is supposed to regenerate, and determine the second electric energy to be equal to an available input electric energy of the auxiliary power supply, when the charging/discharging facility is in a discharge predominant state at a time when the failure of the main power source occurred.

The controller may be configured to determine, from the electric energy profile, a reference electric energy corresponding to the time when the failure occurred and a minimum electric energy corresponding to a time that will come after the failure occurred, and determine the expected regenerative energy to be equal to a difference between the reference electric energy and the minimum electric energy.

The controller may be configured to determined that it is necessary to stop at least one of the first to m-th chargers/dischargers, when the charging/discharging facility is in the discharge dominant state at the time when the failure of the main power source occurred, and the first electric energy is larger than the second electric energy.

The controller may be configured to select at least one remaining electric energy value whose sum by adding the plurality of remaining electric energy values associated with a plurality of chargers/dischargers having a remaining discharging period among the first to m-th chargers/dischargers one by one in a descending order is equal to or larger than a surplus electric energy value, and determine that it is necessary to stop the charger/discharger associated with each of the selected remaining electric energy values. The remaining electric energy value may indicate an electric energy that will be regenerated for a remaining time until a total electric energy of the charging/discharging facility reaches a minimum value. The surplus electric energy value may indicate a difference between the first electric energy and the second electric energy.

A battery charging/discharging system according to another aspect of the present disclosure includes the system control apparatus.

A system control method according to still another aspect of the present disclosure is designed for a battery charging/discharging system including a main power source, a charging/discharging facility and an auxiliary power source. The system control method includes generating an electric energy profile of the charging/discharging facility by applying a mathematical operation to first to m-th power profiles based on operation information of first to m-th chargers/dischargers included in the charging/discharging facility, wherein m is a natural number of 2 or greater; monitoring whether a failure of the main power source occurs; and determine whether it is necessary to stop at least one of the first to m-th chargers/dischargers by comparing a first electric energy of the electric energy profile with a second electric energy of the auxiliary power supply when the failure of the main power source occurs.

The system control method may further include determining expected energy consumption of the charging/-discharging facility as the first electric energy and an available output electric energy of the auxiliary power source as the second electric energy, when the charging/discharging facility is in a charge dominant state at a time when the failure of the main power source occurred.

The system control method may further include determining an electric energy that the charging/discharging facility is supposed to regenerate as the first electric energy and an available input electric energy of the auxiliary power source as the second electric energy, when the charging/discharging facility is in a discharge dominant state at a time when the failure of the main power source occurred.

Advantageous Effects

According to at least one of the embodiments of the present disclosure, it may be possible to prevent a situation in which the charging/discharging process for all the battery boxes is completely stopped in the event of failure of the main power source of the battery charging/discharging system, by stopping at least one charger/discharger operating in the charging mode or the discharging mode or prohibiting the operation of at least one charger/discharger at rest among the plurality of chargers/dischargers included in the charging/discharging facility to allow the remaining charger/discharger not prohibited from operating to faithfully perform the charging/discharging process.

In addition, according to at least one of the embodiments of the present disclosure, it may be possible to prolong the charging/discharging process for at least some of the plurality of battery boxes as long as possible, by determining which of the plurality of chargers/dischargers to adjust the power profile according to which of charging and discharging is dominant at the time when the failure of the main power source occurred.

The effects of the present disclosure are not limited to the aforementioned effects, and these and other effects will be clearly understood by those skilled in the art from the appended claims.

BRIEF DESCRIPTION OF THE DRAWINGS

The accompanying drawings illustrate exemplary embodiments of the present disclosure and together with the following detailed description, serve to provide a better understanding of the technical aspects of the present disclosure, and thus the present disclosure should not be construed as being limited to the drawings.

FIG. 1 is a diagram schematically showing the overall architecture of a battery charging/discharging system according to an embodiment of the present disclosure.

FIG. 2 is a diagram schematically showing a connection relationship between the components of the battery charging/discharging system shown in FIG. 1.

FIG. 3 is a graph referenced in describing an exemplary power profile of a charger/discharger.

FIG. 4 is a graph referenced in exemplarily describing a change in total power of a charging/discharging facility over time.

FIG. 5 is a graph referenced in exemplarily describing a change in total electric energy of the charging/discharging facility over time.

FIG. 6 is a flowchart schematically illustrating a system control method according to another embodiment of the present disclosure.

FIG. 7 is a flowchart schematically illustrating an example of subroutines that may be included in step S650 of FIG. 6.

FIG. 8 is a graph referenced in describing the method of FIG. 7.

FIG. 9 is a flowchart schematically illustrating another example of subroutines that may be included in step S650 of FIG. 6.

FIG. 10 is a graph referenced in describing the method of FIG. 9.

FIG. 11 is a flowchart schematically illustrating an example of subroutines that may be included in step S660 of FIG. 6.

FIGS. 12 and 13 are graphs referenced in describing the method of FIG. 11.

FIG. 14 is a flowchart schematically illustrating another example of subroutines that may be included in step S660 of FIG. 6.

FIGS. 15 and 16 are graphs referenced in describing the method of FIG. 14.

BEST MODE

Hereinafter, exemplary embodiments of the present disclosure will be described in detail with reference to the accompanying drawings. Prior to the description, it should be understood that the terms or words used in the specification and the appended claims should not be construed as being limited to general and dictionary meanings, and rather, should be interpreted based on the meanings and concepts corresponding to the technical aspects of the present disclosure on the basis of the principle that the inventor is allowed to define the terms appropriately for the best explanation.

Therefore, the embodiments described herein and the illustrations shown in the drawings are exemplary embodiments of the present disclosure to describe the technical aspects of the present disclosure and not intended to be limiting, so it should be understood that a variety of other equivalents and modifications could be made thereto at the time the application was filed.

The terms including the ordinal numbers such as "first", "second" and the like, are used to distinguish one element from another among various elements, and not intended to limit the elements by the terms.

Unless the context clearly indicates otherwise, the terms "comprise" and "include" when used in this specification, specify the presence of the stated elements, but do not preclude the presence or addition of one or more other elements. Additionally, the term "unit" as used herein refers to a processing unit of at least one function or operation, and may be implemented by hardware and software either alone or in combination.

In addition, throughout this specification, it will be further understood that when an element is referred to as being "connected to" another element, it can be directly connected to the other element or intervening elements may be present.

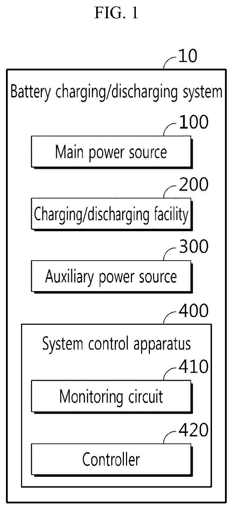

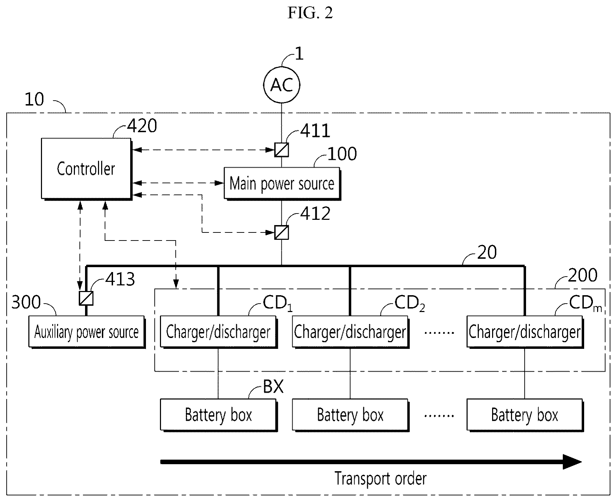

FIG. 1 is a diagram schematically showing the overall architecture of a battery charging/discharging system 10 according to an embodiment of the present disclosure, and FIG. 2 is a diagram schematically showing a connection relationship between the components of the battery charging/discharging system 10 shown in FIG. 1.

Referring to FIGS. 1 and 2, the battery charging/discharging system 10 includes a main power source 100, a charging/discharging facility 200, an auxiliary power source 300, a direct current (DC) grid 20 and a system control apparatus 400.

The main power source 100, the charging/discharging facility 200 and the auxiliary power source 300 may be electrically coupled through the DC grid 20 to enable bidirectional power supply.

The main power source 100 is installed on a power line connecting an alternating current (AC) power network 1 to the DC grid 20. The main power source 100 converts AC power supplied from the AC power network 1 to DC power and supplies it to the DC grid 20. The main power source 100 may also be referred to as 'power conversion facility'.

The voltage of the DC power supplied from the main power source 100 to the DC grid 20 may be maintained at a reference voltage (for example, preset to 370 V) by feedback control.

The main power source 100 includes an AC-DC converter. The system control apparatus 400 may perform ON/OFF control for the AC-DC converter or adjust the magnitude of the DC power supplied from the AC-DC converter to the DC grid 20 according to the condition of the AC power network 1.

The charging/discharging facility 200 includes first to m-th chargers/dischargers $CD_1 \sim CD_m$. m is a natural number of 2 or greater. The charger/discharger CD may include at least one bidirectional DC-DC converter. When x is a natural number that is equal to or smaller than m, an x-th charger/discharger $CD_x$ may relay the bidirectional power transfer between a battery box BX transported to the x-th charger/discharger $CD_x$ and the DC grid 20.

The charging/discharging facility 200 may simultaneously perform the individual charging/discharging process on a maximum of m battery boxes BX. That is, the battery boxes BX are sequentially transported to the battery charging/discharging system 10 after they undergo an assembly process, and the charging/discharging facility 200 sequentially performs the charging/discharging process on the battery boxes BX in a first-in, first-out manner. For example, among two battery boxes BX, any one battery box BX transported earlier may be charged and discharged by the first charger/discharger $CD_1$, and the other battery box BX transported later may be charged and discharged by the second charger/discharger $CD_2$.

In addition, the first to m-th chargers/dischargers $CD_1 \sim CD_m$ may independently operate in a charging mode, a discharging mode and a resting mode. For example, at the same timing, any one of the first to m-th chargers/dischargers $CD_1 \sim CD_m$ may operate in the charging mode, another may operate in the discharging mode, and the other may operate in the resting mode.

The auxiliary power source 300 is not limited to a particular one and may include any type of device having a storage function and a supply function of electrical energy, such as a battery bank or an energy storage system (ESS).

The system control apparatus 400 includes a monitoring circuit 410 and a controller 420.

The monitoring circuit 410 may individually monitor the condition of the main power source 100 and the condition of the auxiliary power source 300.

The monitoring circuit 410 may include at least one of a first sensor module 411 to measure AC power input/output through a first power channel of the main power source 100, or a second sensor module 412 to measure DC power input/output through a second power channel of the main power source 100. The measurement data of each of the first sensor module 411 and the second sensor module 412 may indicate the condition of the main power source 100. The monitoring circuit 410 may include a third sensor module 413 to measure the voltage and current of the auxiliary power source 300. The measurement data of the third sensor module 413 may indicate the condition of the auxiliary power source 300.

The controller 420 may detect a failure of the main power source 100 based on the measurement data collected from the first sensor module 411 and/or the second sensor module 412 of the monitoring circuit 410. The type of failure of the main power source 100 may include, for example, (i) cessation of operation of the main power source 100 due to a breakdown, (ii) a power outage in the AC power network 1, (iii) disconnection of the first power channel between the AC power network 1 and the main power source 100, and (iv) disconnection of the second power channel between the main power source 100 and the DC grid 20. The failure of the main power source 100 may lead to interruption of the output operation of charge power from the main power source 100 to the charging/discharging facility 200, and interruption of the input operation of regenerative power from the charging/discharging facility 200 to the main power source 100.

The controller 420 may determine at least one of available output electric energy or available input electric energy of the auxiliary power source 300 based on the measurement data collected from the third sensor module 413 of the monitoring circuit 410.

The available output electric energy corresponds to electric capacity stored in the auxiliary power source 300, and may refer to electrical energy reserves that may be used to continue the charging operation of the charging/discharging facility 200. For example, in the event of failure of the main power source 100, the charge power from the auxiliary power source 300 may be supplied to at least one charger/discharger operating in the charging mode among the first to m-th chargers/dischargers $CD_1$~$CD_m$ within the limit of the available output electric energy.

The available input electric energy corresponds to electric capacity that can be additionally stored in the auxiliary power source 300, and may refer to electrical energy that may be used to continue the discharging operation of the charging/discharging facility 200 even in the event of failure of the main power source 100. For example, in the event of failure of the main power source 100, the regenerative power from at least one charger/discharger operating in the discharging mode among the first to m-th chargers/dischargers $CD_1$~$CD_m$ may be stored in the auxiliary power source 300 within the limit of the available input electric energy. The maximum electric energy the auxiliary power source 300 can store may be equal to the sum of the available output electric energy and the available input electric energy.

The controller 420 is configured to perform a control function related to the first to m-th chargers/dischargers $CD_1$~$CD_m$ according to the condition of the main power source 100 and the condition of the auxiliary power source 300 monitored by the monitoring circuit 410.

The controller 420 may include, in hardware, at least one of application specific integrated circuits (ASICs), digital signal processors (DSPs), digital signal processing devices (DSPDs), programmable logic devices (PLDs), field programmable gate arrays (FPGAs), microprocessors or electrical units for performing other functions.

The controller 420 may have memory therein. The memory may include at least one type of storage medium of flash memory type, hard disk type, Solid State Disk (SSD) type, Silicon Disk Drive (SDD) type, multimedia card micro type, random access memory (RAM), static random access memory (SRAM), read-only memory (ROM), electrically erasable programmable read-only memory (EEPROM) or programmable read-only memory (PROM). The memory may store data and programs required for the operation by the controller 420. The memory may store data indicating the results of the operation by the controller 420.

The controller 420 may perform the control function for protecting the battery charging/discharging system 10 when a failure or potential failure of the main power source 100 is identified based on the data collected from the monitoring circuit 410.

As an example, in a charge dominant state where the total charge power supplied from the DC grid 20 to the charging/discharging facility 200 is larger than the regenerative power (referred to as 'total discharge power') supplied from the charging/discharging facility 200 to the DC grid 20, the controller 420 may control the main power source 100 to increase the DC power output to the DC grid 20 in order to suppress an excessive voltage drop of the DC grid 20.

As another example, in a discharge dominant state where the regenerative power supplied from the charging/discharging facility 200 to the DC grid 20 is larger than the total charge power supplied from the DC grid 20 to the charging group, the controller 420 may control the main power source 100 to reduce the DC power output to the DC grid 20 in order to suppress an excessive voltage rise of the DC grid 20.

When a failure of the main power source 100 is not identified from the data collected from the monitoring circuit 410, the controller 420 may control the main power source 100 and the first to m-th chargers/dischargers $CD_1 \sim CD_m$, following the control sequence according to first to m-th power profiles associated with the first to m-th chargers/dischargers $CD_1 \sim CD_m$, respectively.

An x-th power profile may be a dataset that defines a power input/output sequence of the charging/discharging process for the battery box BX transported to the x-th charger/discharger $CD_x$. More specifically, the x-th power profile may define a power profile representing a change in power over time from when the x-th charger/discharger CDx starts the charging/discharging process.

The memory may record a predetermined reference power profile. The reference power profile may be a dataset that defines a change in input/output power of the charger/discharger over time from the starting time of the charging/-discharging process. The controller 420 may determine the x-th power profile by applying the operation starting time of the x-th charger/discharger CDx to the reference power profile when the x-th charger/discharger CDx starts to operate among the first to m-th chargers/dischargers $CD_1 \sim CD_m$. Accordingly, the shape of the x-th power profile may be the same as the reference power profile.

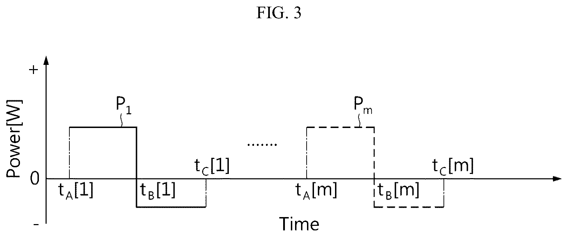

FIG. 3 is a graph referenced in describing an exemplary power profile of the charger/discharger.

In the graph of FIG. 3, the horizontal axis (X axis) indicates time and the vertical axis (Y axis) indicates power. For convenience of description, the positive sign is given to the charge power and the negative sign is given to the regenerative power.

Referring to FIG. 3, the power profile $P_1$ corresponds to the first power profile associated with the first charger/discharger $CD_1$, and the power profile $P_m$ corresponds to the m-th power profile associated with the m-th charger/discharger $CD_m$.

$t_A[1]$ denotes the starting time of the charging/discharging process of the first charger/discharger $CD_1$ for the battery box BX transported to the first charger/discharger $CD_1$, and $t_A[m]$ denotes the starting time of the charging/discharging process of the m-th charger/discharger $CD_m$ for the battery box BX transported to the m-th charger/discharger $CD_m$. Each charger/discharger performs the common charging/discharging process, so when the power profile $P_1$ is shifted to the right by a time difference between $t_A[1]$ and $t_A[m]$, the power profile $P_1$ and the power profile $P_m$ may completely overlap. Because the power of the power profile $P_1$ at $t_A[1]$ has the positive sign, the first charger/discharger $CD_1$ may operate in the charging mode at the start of the charging/discharging process.

$t_B[1]$ denotes the time when the first charger/discharger $CD_1$ is switched from the charging mode to the discharging mode, and $t_B[m]$ denotes the time when the m-th charger/discharger $CD_m$ is switched from the charging mode to the discharging mode. Accordingly, the first charger/discharger $CD_1$ may supply the regenerative power to the DC grid 20 from $t_B[1]$, and the m-th charger/discharger $CD_m$ may supply the regenerative power to the DC grid 20 from $t_B[m]$.

tc[1] denotes the completion time of the charging/discharging process of the first charger/discharger $CD_1$, and tc[m] denotes the completion time of the charging/discharging process of the m-th charger/discharger $CD_m$. When the first to m-th chargers/dischargers $CD_1 \sim CD_m$ sequentially start the charging/discharging process in the order of the first charger/discharger $CD_1$ to the m-th charger/discharger $CD_m$, a period of time from the operation starting time $t_A[1]$ of the first charger/discharger $CD_1$ to the operation completion time tc[m] of the m-th charger/discharger $CD_m$ may be referred to as the entire operation period of the charge/discharge facility 200.

For a period of time from $t_A[m]$ to $t_C[1]$, both the first charger/discharger $CD_1$ and the m-th charger/discharger $CD_m$ may operate in the resting mode. In addition, for a period of time from $t_B[1]$ to $t_A[m]$, the first charger/discharger $CD_1$ may operate in the discharging mode, whereas the m-th charger/discharger $CD_m$ may operate in the resting mode. In addition, for a period of time from $t_C[1]$ to $t_C[m]$, the first charger/discharger $CD_1$ may operate in the resting mode, whereas the m-th charger/discharger $CD_m$ may operate in the resting mode, the charging mode and the discharging mode in that order. As described above, the first to m-th chargers/dischargers $CD_1 \sim CD_m$ may independently perform the charging/-discharging process.

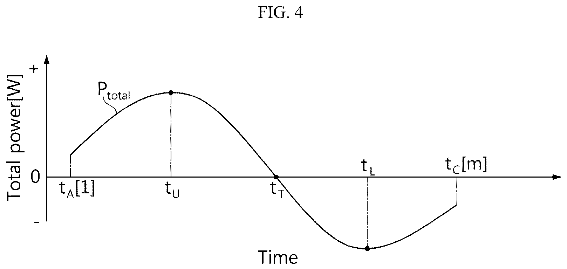

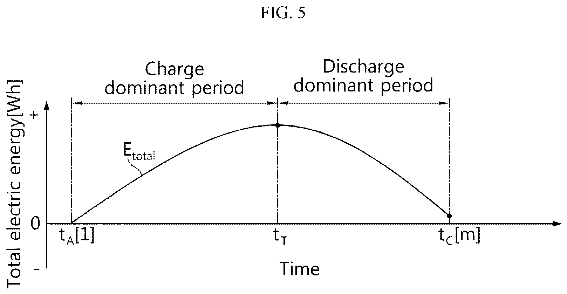

FIG. 4 is a graph referenced in exemplarily describing a change in total power of the charging/discharging facility 200 over time, and FIG. 5 is a graph referenced in exemplarily describing a change in total electric energy of the charging/discharging facility 200 over time.

In the graph of FIG. 4, the horizontal axis (X axis) indicates time and the vertical axis (Y axis) indicates power. A total power profile $P_{total}$ represents a change in the total power of the charging/discharging facility 200 over time. The controller 420 may generate the total power profile $P_{total}$ by applying a first matrix operation (see Equation 3-1) to the first to m-th power profiles $P_1 \sim P_m$.

At a specific time, the total power of the charging/discharging facility 200 may correspond to a difference between the total charge power and the total regenerative power of the first to m-th chargers/dischargers $CD_1 \sim CD_m$. The total charge power may be the sum of charge power supplied to the charger(s)/discharger(s) operating in the charging mode among the first to m-th chargers/dischargers $CD_1 \sim CD_m$. The total regenerative power may be the sum of regenerative power supplied from the charger(s)/discharger(s) operating in the discharging mode among the first to m-th chargers/-dischargers $CD1 \sim CD_m$.

For reference, when the charging/discharging process is individually performed on m battery boxes BX in the order of the first charger/discharger $CD_1$ to the m-th charger/discharger $CD_m$, $t_C[m]$ may be the operation completion time of the charging/discharging facility 200.

As a simple example, assume that the first to m-th chargers/dischargers $CD_1 \sim CD_m$ sequentially start the charging/discharging process one after another at each predetermined unit time H, the total time required for each charging/discharging process is U times as long as the unit time H (U is a natural number of 2 or greater), and the charge power and the discharge power are a constant power. In the present disclosure, the constant power may refer to power having an amount of change per unit time H below a predetermined threshold.

Thus, even before at least one of the first to m-th chargers/dischargers $CD_1 \sim CD_m$ starts the charging/discharging process, when the starting time of the charging/discharging process of the charger/discharger $CD_1$ is set, the controller 420 may generate the first to m-th power profiles $P_1 \sim P_m$. In addition, the x-th power profile may be represented by a simplified (equivalent) matrix shown in Equation 1 below.

<Equation 1>

$$P_x = \begin{bmatrix} p_x(t_A[1]) \\ p_x(t_A[1] + H) \\ p_x(t_A[1] + 2H) \\ \vdots \\ p_x(t_A[1] + U \times H) \\ \vdots \\ p_x(t_A[1] + (U+m) \times H) \end{bmatrix} = \begin{bmatrix} p_x(t_A[1]) \\ p_x(t_A[1] + H) \\ p_x(t_A[1] + 2H) \\ \vdots \\ p_x(t_A[1] + U \times H) \\ \vdots \\ p_x(t_C[m]) \end{bmatrix}$$

In Equation 1, $P_x$ denotes the x-th power profile, and $p_x(t)$ denotes the power of the x-th charger/discharger $CD_x$ at the time t.

Referring to FIG. 4, the total power of the charging/discharging facility 200 at a timing may indicate the sum of power of the first to m-th chargers/dischargers $CD_1 \sim CD_m$ at the same timing. That is, the power of each of the first to m-th chargers/dischargers $CD_1 \sim CD_m$ and the total power of the charging/discharging facility 200 may have a relationship according to the following Equation 2.

<Equation 2>

$$p_{total}(t) = \sum_{x=1}^{m} p_x(t)$$

In Equation 2, $p_x(t)$ is the same as that of Equation 1, and $p_{total}(t)$ may denote the total power of the charging/discharging facility 200 at the time t.

In addition, the total power profile $P_{total}$ of the charging/discharging facility 200 indicating the change in total power during the entire operation period from $t_A[1]$ to $t_C[m]$ may be represented by Equation 3-1 or Equation 3-2 below.

<Equation 3-1>

$$P_{total} = \begin{bmatrix} P_1 & P_2 & \cdots & P_m \end{bmatrix} \begin{bmatrix} 1 \\ 1 \\ \vdots \\ 1 \end{bmatrix}$$

<Equation 3-2>

$$P_{total} = \begin{bmatrix} p_{total}(t_A[1]) \\ p_{total}(t_A[1] + H) \\ p_{total}(t_A[1] + 2H) \\ \vdots \\ p_{total}(t_A[1] + U \times H) \\ \vdots \\ p_{total}(t_C[m]) \end{bmatrix}$$

In Equation 3-2, $p_{total}(t)$ is the same as that of Equation 2.

Referring to FIGS. 3 and 4 together, at $t_A[1]$, the first charger/discharger $CD_1$ starts the charging/discharging process. Subsequently, the battery boxes BX are transported to the charge/discharge facility 200 in a sequential order, and the second to m-th chargers/dischargers $CD_2$~$CD_m$ start the charging/discharging process in a sequential order. Accordingly, until a certain amount of time passes from $t_A[1]$, the total power of the charging/discharging facility 200 gradually increases.

tu denotes the time when the total power of the charging/discharging facility 200 is at the maximum. The total power of the charging/discharging facility 200 gradually decreases from the time tu and reaches 0[W] at the time $t_T$. That is, at the time $t_T$, the total charge power is equal to the total discharge power. A state in which the total power of the charging/discharging facility 200 has the positive sign may be referred to as 'charge dominant state', and a period of time from $t_A[1]$ to $t_T$ during which the charge dominant state is maintained may be referred to as 'charge dominant period'.

Meanwhile, from the time $t_B[1]$, the power of the first charger/discharger $CD_1$ has the negative sign, but the total power increases from the time $t_B[1]$ to the time tu, because at least one other charger/discharger operates in the charging mode for the same period of time.

$t_L$ denotes the time when the total power of the charging/discharging facility 200 is at the minimum. The total power of the charging/discharging facility 200 gradually increases from the time $t_L$ to the time tc[m]. A state in which the total power of the charging/discharging facility 200 has the negative sign may be referred to as 'discharge dominant state (or regeneration dominant state)', and a period of time from $t_T$ to tc[m] during which the discharge dominant state is maintained may be referred to as 'discharge dominant period'.

In the graph of FIG. 5, the horizontal axis (X axis) indicates time and the vertical axis (Y axis) indicates electric energy. An electric energy profile $E_{total}$ shows a change in total electric energy of the charging/discharging facility 200 over time during the entire operation period. The controller 420 may determine the electric energy profile $E_{total}$ by applying a second matrix operation (see Equation 4-1) to the total power profile $P_{total}$.

When the total power profile $P_{total}$ of the charging/discharging facility 200 may be represented by Equation 3-1 or Equation 3-2, the electric energy profile $E_{total}$ may be represented by Equation 4-1 or Equation 4-2 below.

<Equation 4-1>

$$E_{total} = H \begin{bmatrix} 1 & 0 & 0 & 0 & \cdots & 0 \\ 1 & 1 & 0 & 0 & \cdots & 0 \\ 1 & 1 & 1 & 0 & \cdots & 0 \\ \vdots & \vdots & \vdots & \vdots & \ddots & \vdots \\ 1 & 1 & 1 & 1 & \cdots & 1 \end{bmatrix} P_{total}$$

In Equation 4-1, the matrix between H and $P_{total}$ may be a triangular matrix.

<Equation 4-2>

$$E_{total} = \begin{bmatrix} p_{total}(t_A[1]) \\ \sum_{r=0}^{1} p_{total}(t_A[1] + r \times H) \\ \sum_{r=0}^{2} p_{total}(t_A[1] + r \times H) \\ \vdots \\ \sum_{r=0}^{U} p_{total}(t_A[1] + r \times H) \\ \vdots \\ \sum_{r=0}^{U+m} p_{total}(t_A[1] + r \times H) \end{bmatrix} \times H$$

In Equation 4-2, $p_{total}(t)$ is the same as that of Equation 2.

In addition, the electric energy of the charging/discharging facility200 from $t_A[1]$ to the time t that is later than $t_A[1]$ may be represented by Equation 5 below.

<Equation 5>

$$E_{total}(t) = H \times \sum_{r=0}^{\frac{t-t_A[1]}{H}} p_{total}(t_A[1] + r \times H)$$

Referring to FIGS. 4 and 5 together, because the total power of the total power profile $P_{total}$ has the positive sign from $t_A[1]$ to $t_T$, the total electric energy of the charging/discharging facility 200 keeps rising from $t_A[1]$ to $t_T$.

At the time $t_T$, the total power of the charging/discharging facility 200 changes from the positive sign to the negative sign, so the total electric energy of the electric energy profile is at the maximum at the time $t_T$.

Because the total power of the total power profile $P_{total}$ has the negative sign for the period of time from $t_T$ to $t_C[m]$, the total electric energy of the charging/discharging facility 200 keeps decreasing from the time $t_T$ and reaches the minimum at the time $t_C[m]$.

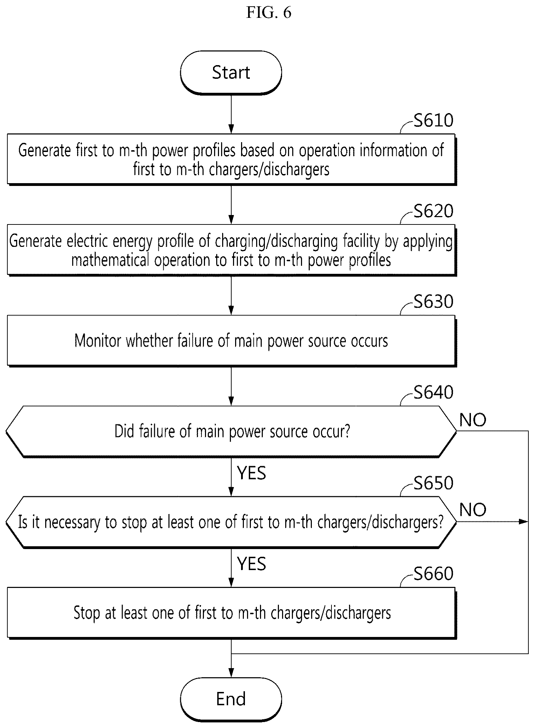

FIG. 6 is a flowchart schematically illustrating a system control method according to another embodiment of the present disclosure. The method according to FIG. 6 may be periodically or aperiodically performed in a repeated manner by the system control apparatus 400 while the charging/discharging process is performed by the battery charging/discharging system 10.

Referring to FIGS. 1 to 6, in step S610, the controller 420 generates the first to m-th power profiles $P_1 \sim P_m$ based on operation information of each of the first to m-th chargers/dischargers $CD_1 \sim CD_m$. The operation information of a charger/discharger may indicate the operation starting time of the charger/discharger, and further indicate whether the charger/discharger are in operation or its operation is stopped.

In step S620, the controller 420 generates the electric energy profile $E_{total}$ of the charging/discharging facility 200 by applying a mathematical operation to the first to m-th power profiles $P_1 \sim P_m$. The mathematical operation may include the first matrix operation applied to the first to m-th power profiles $P_1 \sim P_m$ to determine the total power profile $P_{total}$ and the second matrix operation applied to the total power profile $P_{total}$ to determine the electric energy profile $E_{total}$.

In step S630, the controller 420 monitors whether a failure of the main power source 100 occurs based on the data collected from the monitoring circuit 410. Additionally, the controller 420 may monitor the condition (for example, electric energy information) of the auxiliary power source 300.

In step S640, the controller 420 determines whether a failure of the main power source 100 occurred. When a value of the step S640 is "YES", the method of FIG. 6 may move to step S650. When the value of the step S640 is "NO", the method of FIG. 6 may end.

In the step S650, the controller 420 determines whether it is necessary to stop at least one of the first to m-th chargers/dischargers $CD_1$~$CD_m$ by comparing first electric energy of the electric energy profile with second electric energy of the auxiliary power source 300. When a value of the step S650 is "YES", the method of FIG. 6 may move to step S660. When the value of the step S650 is "NO", the method of FIG. 6 may end

In the step S660, the controller 420 selects at least one of the first to m-th chargers/dischargers $CD_1$~$CD_m$ and stops the operation of each of the selected chargers/dischargers.

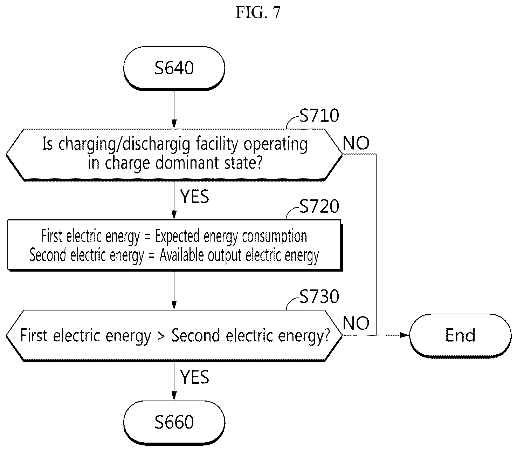

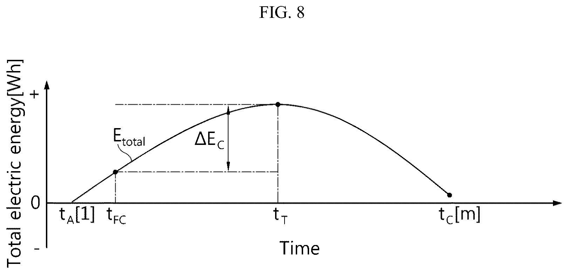

FIG. 7 is a flowchart schematically illustrating an example of subroutines that may be included in the step S650 of FIG. 6, and FIG. 8 is a graph referenced in describing the method of FIG. 7.

Referring to FIG. 7, in step S710, the controller 420 determines whether the charging/discharging facility 200 is operating in the charge dominant state. A value of the step S710 being "YES" indicates that the failure of the main power source 100 occurred during the charging/discharging process of the charging/discharging facility 200 in the charge dominant state.

Assume that the electric energy profile of FIG. 8 is the same as the electric energy profile of FIG. 5. When $t_{FC}$ denotes the time when the failure of the main power source 100 occurred, because the time $t_{FC}$ is earlier than the time $t_T$ that will come afterwards, the output value of the step S710 may be "YES". When the value of the step S710 is "YES", the method may move to step S720.

In the step S720, the controller 420 determines the first electric energy to be equal to expected energy consumption of the charging/discharging facility 200, and the second electric energy to be equal to the available output electric energy of the auxiliary power source 300.

In step S730, the controller 420 determines whether the first electric energy is larger than the second electric energy.

Referring to FIG. 8, the expected energy consumption $\Delta E_C$ may indicate the electric energy that would be supplied from the main power source 100 to the charging/discharging facility 200 from $t_{FC}$ to $t_T$ unless the failure of the main power source 100 occurred. The controller 420 may determine the expected energy consumption $\Delta E_C$ according to a difference between the current value (total electric energy at the time $t_{FC}$, 'reference electric energy') and the maximum value (total electric energy at the time $t_T$) of the total electric energy of the charging/discharging facility 200.

The expected energy consumption may be determined through Equation 6 below based on the above Equation 5.

<Equation 6>

$$\Delta E_C = E_{total}(t_T) - E_{total}(t_{FC})$$

When the auxiliary power source 300 has larger electric energy than the expected energy consumption at the time $t_{FC}$, the auxiliary power source 300 may supply a sufficient amount of charge power to the charging/discharging facility 200 until the time $t_T$ in place of the main power source 100.

When the available output electric energy is less than the expected energy consumption, the auxiliary power source 300 may run out of energy before the time $t_T$ comes, causing an unexpected cessation of the operation of the plurality of chargers/dischargers in the charging mode. Accordingly, a value of the step S720 being "YES" may indicate that it is necessary to modify at least one of the first to m-th power profiles to reduce the expected energy consumption below the available output electric energy. When the value of the step S730 is "YES", the method may move to the step S660 of FIG. 6. When the value of the step S730 is "NO", the method according to FIG. 6 may end.

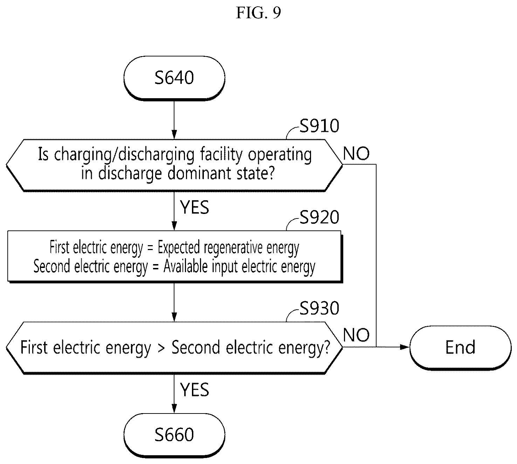

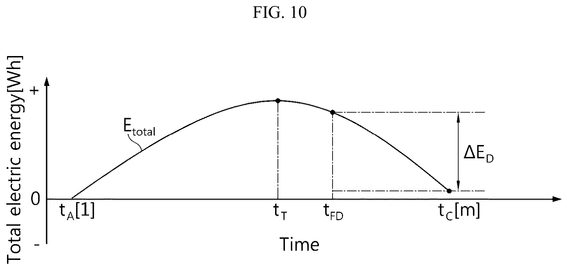

FIG. 9 is a flowchart schematically illustrating another example of subroutines that may be included in the step S650 of FIG. 6, and FIG. 10 is a graph referenced in describing the method of FIG. 9.

Referring to FIG. 9, in step S910, the controller 420 determines whether the charging/discharging facility 200 is operating in the discharge dominant state. A value of the step S910 being "YES" indicates that the failure of the main power source 100 occurred during the charging/discharging process of the charging/discharging facility 200 in the discharge dominant state.

Assume that the electric energy profile of FIG. 10 is the same as the electric energy profile of FIG. 5. As opposed to $t_{FC}$ in FIG. 8, when $t_{FD}$ denotes the time when the failure of the main power source 100 occurred, because the time $t_{FD}$ is later than the time $t_T$, the output value of the step S910 may be "YES". When the value of the step S910 is "YES", the method may move to step S920.

In the step S920, the controller 420 determines the first electric energy to be equal to electric energy that the charging/discharging facility 200 is supposed to regenerate, and the second electric energy to be the available input electric energy of the auxiliary power source 300.

In step S930, the controller 420 determines whether the first electric energy is larger than the second electric energy. The first electric energy and the second electric energy in the method according to FIG. 9 may be different from the first electric energy and the second electric energy in the method according to FIG. 7.

Referring to FIG. 10, the expected regenerative energy $\Delta E_D$ may indicate electric energy that will be regenerated by the charging/discharging facility 200 from $t_{FD}$ to tc[m]. That is, the expected regenerative energy $\Delta E_D$ may be a difference between the total electric energy ('reference electric energy') at $t_{FD}$ and the total electric energy at tc[m] according to the electric energy profile $E_{total}$.

The expected regenerative energy may be represented by Equation 7 below based on the above Equation 5

<Equation 7>

$$\Delta E_D = E_{total}(t_{FD}) - E_{total}(t_C[m])$$

When the available input electric energy of the auxiliary power source 300 at the time $t_{FD}$ is larger than the expected regenerative energy, the regenerative power supplied from the charging/discharging facility 200 may be stored in the auxiliary power source 300 from time $t_{FD}$ to $t_C[m]$.

When the available input electric energy is less than the expected regenerative energy, the auxiliary power source 300 may be fully charged before the time $t_C[m]$ comes, causing an unexpected cessation of the operation of the plurality of chargers/dischargers in the discharging mode. Accordingly, a value of the step S930 being "YES" may indicate that it is necessary to modify at least one of the first to m-th power profiles $P_1$~$P_m$ to reduce the expected regenerative energy below the available input electric energy. When the value of the step S930 is "YES", the method may move to the step S660 of FIG. 6. When the value of the step S930 is "NO", the method according to FIG. 6 may end.

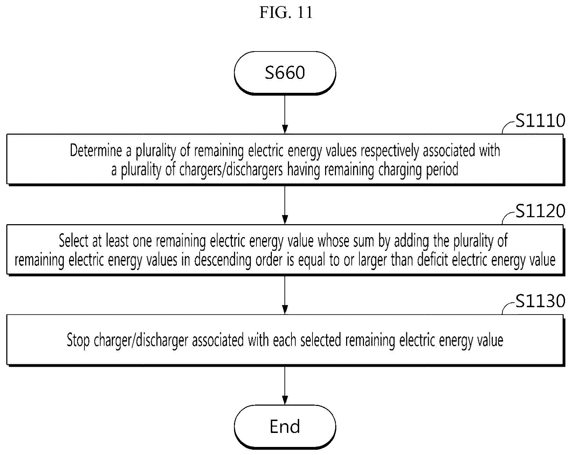

FIG. 11 is a flowchart schematically illustrating an example of subroutines that may be included in the step S660 of FIG. 6, and FIGS. 12 and 13 are graphs referenced in describing the method of FIG. 11. The subroutines according to FIG. 11 may be performed on the condition that the subroutines according to FIG. 7 are performed.

Referring to FIG. 11, in step S1110, the controller 420 determines a plurality of remaining electric energy values respectively associated with the plurality of chargers/dischargers having a remaining charging period based on the time when the failure occurred. Here, a charger/discharger having the remaining charging period may indicate that the charger/discharger is already in the charging mode or will operate in the charging mode. That is, before a part corresponding to the charging mode in the power profile of the charger/discharger is completed, the charger/discharger has the remaining charging period. For example, referring to FIG. 3, at the time $t_A[1]$, all of the first to m-th chargers/-dischargers $CD_1$~$CD_m$ have the remaining charging period.

Assume that i is a natural number of 1 or greater, j is a natural number that is larger than i and is equal to or smaller than m, and y is a natural number that is equal to or larger than i and is equal to or smaller than j. In this instance, the y-th remaining electric energy value may indicate electric energy that will be consumed by a y-th charger/discharger $CD_y$ for the remaining time until the total electric energy of the charging/discharging facility 200 reaches the maximum value. The controller 420 may determine the y-th remaining electric energy value by applying an integration operation in the time range $t_{FC}$~$t_T$ to the y-th power profile. The y-th remaining electric energy value may be represented by Equation 8 below.

<Equation 8>

$$EA_y = H \times \sum_{r=\frac{t_{FC} - t_A[1]}{H}}^{\frac{t_T - t_A[1]}{H}} p_y(t_A[1] + r \times H)$$

In Equation 8, $P_y(t)$ denotes the power of the y-th charger/discharger $CD_y$ at the time t, and $EA_y$ may denote the y-th remaining electric energy value.

In step S1120, the controller 420 selects at least one remaining electric energy whose sum by adding the plurality of remaining electric energy values one by one in a descending order is equal to or larger than a deficit electric energy value. The deficit electric energy value may indicate the difference between the first electric energy and the second electric energy determined in the step S720.

For example, assume that the i-th to j-th chargers/dischargers $CD_i$~$CD_j$ have the remaining charging period at the time when the failure occurred, and the remaining electric energy values become smaller in the order from the i-th remaining electric energy value to the j-th remaining electric energy value. When (i) the sum of a-th to j-th remaining electric energy values of the i-th to j-th remaining electric energy values is equal to or larger than the deficit electric energy value, and (ii) the sum of (a+1)-th to j-th remaining electric energy values is smaller than the deficit electric energy value, the a-th to j-th remaining electric energy values may be selected in the step S1120. a may be a natural number that is equal to or larger than i and is smaller than j.

In step S1130, the controller 420 stops the charger/discharger associated with each of the remaining electric energy values selected in the step S1120. In addition, the controller 420 may update the operation information of each of the stopped chargers/dischargers.

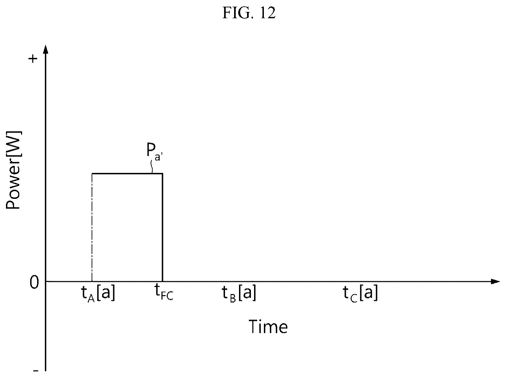

Referring to FIG. 12, when the a-th charger/discharger $CD_a$ is stopped, the power value after the $t_{FC}$ in the power profile $P_a$ is changed to 0 [W], and only a part corresponding to $t_A[a]$~$t_{FC}$ among $t_A[a]$~$t_C[a]$ remains in the modified power profile $P_{a'}$ of the a-th charger/discharger $CD_a$. The same is the case with the power profile of the other charger/discharger associated with the other remaining electric energy value selected in the step S1120.

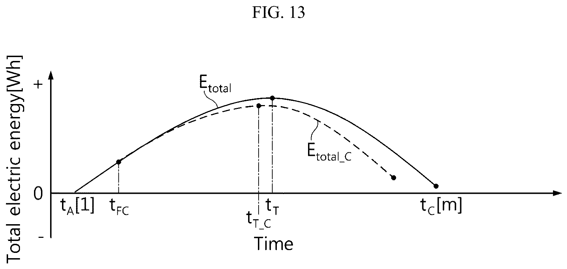

In addition, when the operation of the a-th to j-th chargers/discharger $CD_a$~$CD_j$ in the charging mode is stopped, the controller 420 may change the electric energy profile to the electric energy profile $E_{total\_C}$ shown in FIG. 13. In the range subsequent to the time $t_{FC}$, the total electric energy of the electric energy profile $E_{total\_C}$ is smaller than the total electric energy of the electric energy profile $E_{total}$. In addition, the maximum value of the total electric energy of the electric energy profile $E_{total\_C}$ is smaller than the maximum value of the total electric energy of the electric energy profile $E_{total}$, and the time when the total electric energy is at the maximum may be advanced from $t_T$ to $t_{T\_C}$. For reference, $t_{T\_C}$ may be the same as the time when the charger/discharger $CD_{a-1}$ completes the first charging stage of the charging/discharging process.

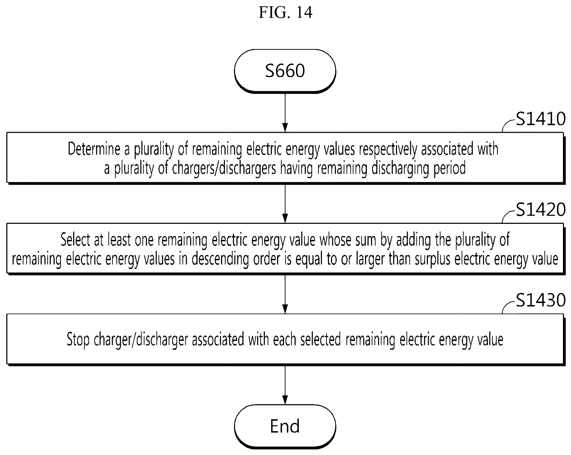

FIG. 14 is a flowchart schematically illustrating another example of subroutines that may be included in the step S640 of FIG. 6, and FIGS. 15 and 16 are graphs referenced in describing the method of FIG. 14. The subroutines according to FIG. 14 may be performed on the condition that the subroutines according to FIG. 9 are performed.

Referring to FIG. 14, in step S1410, the controller 420 determines a plurality of remaining electric energy values respectively associated with the plurality of chargers/dischargers having a remaining discharging period based on the time when the failure occurred. Here, a charger/discharger having the remaining discharging period may indicate that the charger/discharger is already in the discharging mode or will operate in the discharging mode. That is, before a part corresponding to the discharging mode in the power profile of the charger/discharger is completed, the charger/discharger has the remaining discharging period. For example, referring to FIG. 3, at the time tc[1], all of the chargers/dischargers $CD_1$~$CD_m$ other than the charger/discharger $CD_1$ have the remaining discharging period.

Assume that k is a natural number of 1 or greater, 1 is a natural number that is larger than k and is equal to or smaller than m, and z is a natural number that is equal to or larger than k and is equal to or smaller than 1. In this instance, the z-th remaining electric energy value may indicate electric energy that will be regenerated from the z-th charger/-discharger $CD_z$ for the remaining time until the total electric energy of the charging/discharging facility 200 reaches the minimum value. The controller 420 may determine the z-th remaining electric energy value by applying an integration operation in the time range $t_{FD}$~$t_C[m]$ to the z-th power profile. The z-th remaining electric energy value may be represented by Equation 9 below.

<Equation 9>

$$EB_z = H \times \sum_{r=\frac{t_{FD}-t_A[1]}{H}}^{\frac{t_C[m]-t_A[1]}{H}} p_z(t_A[1] + r \times H)$$

In Equation 9, $P_z(t)$ denotes the power of the z-th charger/discharger $CD_z$ at the time t, and $EB_z$ may denote the z-th remaining electric energy value.

In step S1420, the controller 420 selects at least one remaining electric energy value whose sum by adding the plurality of remaining electric energy values one by one in a descending order is equal to or larger than a surplus electric energy value. The surplus electric energy value may indicate the difference between the first electric energy and the second electric energy determined in the step S920.

For example, assume that the k-th to l-th chargers/dischargers $CD_k$~$CD_1$ have the remaining discharge period at the time when the failure occurred, and the remaining electric energy values become smaller in the order from the k-th electric energy value to the l-th remaining electric energy value. When (i) the sum of b-th to l-th remaining electric energy values of the k-th to l-th remaining electric energy values is equal to or larger than the surplus electric energy value, and (ii) the sum of (a+1)-th to j-th remaining electric energy values is smaller than the surplus electric energy value, the a-th to j-th remaining electric energy values may be selected in the step S1120. b is a natural number that is equal to or larger than k and is smaller than 1.

In step S1430, the controller 420 stops the charger/discharger associated with each of the remaining electric energy values selected in the step S1420. In addition, the controller 420 may update the operation information of each of the stopped chargers/dischargers.

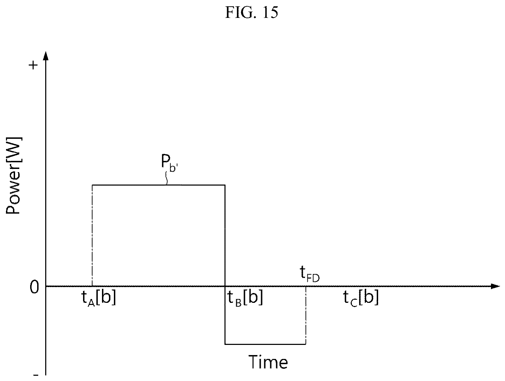

Referring to FIG. 15, when the b-th charger/discharger $CD_b$ is stopped, the power value after the $t_{FD}$ in the power profile $P_b$ is changed to 0 [W], and only a part corresponding to $t_A[b] \sim t_{FD}$ among $t_A[b] \sim t_C[b]$ remains in the modified power profile $P_b'$ of the b-th charger/discharger $CD_b$. The same is the case with the power profile of the other charger/discharger associated with the other remaining electric energy value selected in the step S1420.

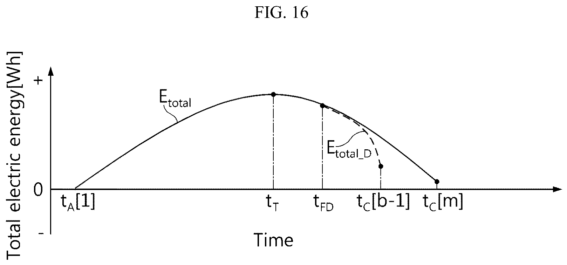

In addition, when the operation of the b-th to l-th chargers/dischargers $CD_b \sim CD_1$ in the discharging mode is stopped, the controller 420 may change the electric energy profile $E_{total}$ to the electric energy profile $E_{total\_D}$ shown in FIG. 16. In the range subsequent to the time $t_{FD}$, the total electric energy of the electric energy profile $E_{total\_D}$ is smaller than the total electric energy of the electric energy profile $E_{total}$. In addition, the minimum value of the total electric energy of the electric energy profile $E_{total\_D}$ is larger than the minimum value of the total electric energy of the electric energy profile $E_{total}$, and the time when the total electric energy is at the minimum may be advanced from tc[m] to tc[b-1]. For reference, $t_C[b-1]$ may be the time when the charger/discharger $CD_{b-1}$ completes the charging/discharging process.

The embodiments of the present disclosure as described above are not embodied only through the apparatus and method, and may be implemented through programs that perform the functions corresponding to the exemplary configurations of the present disclosure or recording media having the programs recorded thereon, and such implementation may be easily achieved by those skilled in the art from the disclosure of the embodiments previously described.

Although the present disclosure has been hereinabove described with regard to certain embodiments and drawings, the present disclosure is not limited thereto and it is obvious to those skilled in the art that various modifications and changes may be made thereto within the scope of the technical aspects of the present disclosure and the appended claims and their equivalents.

Additionally, as many substitutions, modifications and changes may be made to the present disclosure as described above by those skilled in the art without departing from the technical aspects of the present disclosure, the present disclosure is not limited by the disclosed embodiments and the accompanying drawings, and some or all of the embodiments may be selectively combined to allow various modifications.

**Claims**

1. A system control apparatus for a battery charging/discharging system including a main power source, a charging/-discharging facility and an auxiliary power source, the system control apparatus comprising:

   a monitoring circuit to monitor whether a failure of the main power source occurs; and
   a controller to generate an electric energy profile of the charging/discharging facility by applying a mathematical operation to first to m-th power profiles based on operation information of first to m-th chargers/dischargers included in the charging/discharging facility, wherein m is a natural number of 2 or greater, and
   wherein the controller is configured to:
   determine whether it is necessary to stop at least one of the first to m-th chargers/dischargers by comparing a first electric energy of the electric energy profile with a second electric energy of the auxiliary power source, when the failure of the main power source occurs.

2. The system control apparatus according to claim 1,
   wherein the controller is configured to:
   determine the first to m-th power profiles by applying operation starting times of the first to m-th chargers/dischargers to a reference power profile, respectively.

3. The system control apparatus according to claim 1,
   wherein the controller is configured to:

   determine a total power profile of the charging/discharging facility by applying a first matrix operation to the first to m-th power profiles, and
   generate the electric energy profile by applying a second matrix operation to the total power profile.

4. The system control apparatus according to claim 1,
   wherein the controller is configured to:
   determine the first electric energy to be equal to expected energy consumption of the charging/discharging facility and the second electric energy to be equal to an available output electric energy of the auxiliary power source, when the charging/discharging facility is in a charge dominant state at a time when the failure of the main power source occurred.

**5.** The system control apparatus according to claim 4,
wherein the controller is configured to:

determine, from the electric energy profile, a reference electric energy corresponding to the time when the failure occurred and a maximum electric energy corresponding to a time that will come after the failure occurred, and determine the expected energy consumption to be equal to a difference between the reference electric energy and the maximum electric energy.

**6.** The system control apparatus according to claim 4,
wherein the controller is configured to:
determine that it is necessary to stop at least one of the first to m-th chargers/dischargers, when the charging/discharging facility is in the charge dominant state at the time when the failure of the main power source occurred and the first electric energy is larger than the second electric energy.

**7.** The system control apparatus according to claim 6,
wherein the controller is configured to:

select at least one remaining electric energy value whose sum by adding the plurality of remaining electric energy values associated with a plurality of chargers/dischargers having a remaining charging period among the first to m-th chargers/dischargers one by one in a descending order is equal to or larger than a deficit electric energy value, and
determine that it is necessary to stop the charger/discharger associated with each of the selected remaining electric energy values,
wherein the remaining electric energy value indicates an electric energy that will be consumed for a remaining time until a total electric energy of the charging/discharging facility reaches a maximum value, and
wherein the deficit electric energy value indicates a difference between the first electric energy and the second electric energy.

**8.** The system control apparatus according to claim 1,
wherein the controller is configured to:
determine the first electric energy to be equal to an electric energy that the charging/discharging facility is supposed to regenerate, and determine the second electric energy to be equal to an available input electric energy of the auxiliary power supply, when the charging/discharging facility is in a discharge predominant state at a time when the failure of the main power source occurred.

**9.** The system control apparatus according to claim 8,
wherein the controller is configured to:

determine, from the electric energy profile, a reference electric energy corresponding to the time when the failure occurred and a minimum electric energy corresponding to a time that will come after the failure occurred, and determine the expected regenerative energy to be equal to a difference between the reference electric energy and the minimum electric energy.

**10.** The system control apparatus according to claim 8,
wherein the controller is configured to:
determined that it is necessary to stop at least one of the first to m-th chargers/dischargers, when the charging/discharging facility is in the discharge dominant state at the time when the failure of the main power source occurred, and the first electric energy is larger than the second electric energy.

**11.** The system control apparatus according to claim 10,
wherein the controller is configured to:

select at least one remaining electric energy value whose sum by adding the plurality of remaining electric energy values associated with a plurality of chargers/dischargers having a remaining discharging period among the first to m-th chargers/dischargers one by one in a descending order is equal to or larger than a surplus electric energy value, and
determine that it is necessary to stop the charger/discharger associated with each of the selected remaining electric energy values,

wherein the remaining electric energy value indicates an electric energy that will be regenerated for a remaining time until a total electric energy of the charging/discharging facility reaches a minimum value, and

wherein the surplus electric energy value indicates a difference between the first electric energy and the second electric energy.

12. A battery charging/discharging system comprising the system control apparatus according to any one of claims 1 to 11.

13. A system control method for a battery charging/discharging system including a main power source, a charging/-discharging facility and an auxiliary power source, the system control method comprising:

generating an electric energy profile of the charging/discharging facility by applying a mathematical operation to first to m-th power profiles based on operation information of first to m-th chargers/dischargers included in the charging/discharging facility, wherein m is a natural number of 2 or greater;

monitoring whether a failure of the main power source occurs; and

determine whether it is necessary to stop at least one of the first to m-th chargers/dischargers by comparing a first electric energy of the electric energy profile with a second electric energy of the auxiliary power supply when the failure of the main power source occurs.

14. The system control method according to claim 13, further comprising:

determining expected energy consumption of the charging/discharging facility as the first electric energy and an available output electric energy of the auxiliary power source as the second electric energy, when the charging/-discharging facility is in a charge dominant state at a time when the failure of the main power source occurred.

15. The system control method according to claim 13, further comprising:

determining an electric energy that the charging/discharging facility is supposed to regenerate as the first electric energy and an available input electric energy of the auxiliary power source as the second electric energy, when the charging/discharging facility is in a discharge dominant state at a time when the failure of the main power source occurred.

FIG. 1

_10_

Battery charging/discharging system

_100_

Main power source

_200_

Charging/discharging facility

_300_

Auxiliary power source

_400_

System control apparatus

_410_

Monitoring circuit

_420_

Controller

FIG. 2

Transport order

FIG. 3

FIG. 4

FIG. 5

FIG. 6

```
              ┌─────────────┐
              │    Start    │
              └──────┬──────┘
                     │                              ┌S610
     ┌───────────────▼──────────────────────────────────┐
     │ Generate first to m-th power profiles based on    │
     │ operation information of first to m-th            │
     │ chargers/dischargers                              │
     └───────────────┬──────────────────────────────────┘
                     │                              ┌S620
     ┌───────────────▼──────────────────────────────────┐
     │ Generate electric energy profile of charging/     │
     │ discharging facility by applying mathematical     │
     │ operation to first to m-th power profiles         │
     └───────────────┬──────────────────────────────────┘
                     │                              ┌S630
     ┌───────────────▼──────────────────────────────────┐
     │ Monitor whether failure of main power source      │
     │ occurs                                            │
     └───────────────┬──────────────────────────────────┘
                     │                              ┌S640
              ┌──────▼──────────────────────────┐   NO
              ┤ Did failure of main power        ├──────┐
              │ source occur?                    │      │
              └──────┬──────────────────────────┘      │
                     │ YES                        ┌S650 │
              ┌──────▼──────────────────────────┐   NO │
              ┤ Is it necessary to stop at least ├──────┤
              │ one of first to m-th             │      │
              │ chargers/dischargers?            │      │
              └──────┬──────────────────────────┘      │
                     │ YES                        ┌S660 │
     ┌───────────────▼──────────────────────────────────┐ │
     │ Stop at least one of first to m-th                │ │
     │ chargers/dischargers                              │ │
     └───────────────┬──────────────────────────────────┘ │
                     │◄─────────────────────────────────────┘
              ┌──────▼──────┐
              │     End     │
              └─────────────┘
```

FIG. 7

S640

S710

Is charging/dischargig facility operating in charge dominant state? — NO

YES

S720

First electric energy = Expected energy consumption
Second electric energy = Available output electric energy

S730

First electric energy > Second electric energy? — NO — End

YES

S660

FIG. 8

FIG. 9

```
                            ┌─────────────┐
                            │    S640     │
                            └──────┬──────┘
                                   │
                                   │              ╭─S910
              ╱────────────────────┴────────────────╲  NO
             ╱  Is charging/discharging facility operating ╲───┐
             ╲    in discharge dominant state?        ╱       │
              ╲─────────────────┬───────────────────╱        │
                              YES│          ╭─S920            │
                   ┌─────────────┴────────────────────┐       │
                   │ First electric energy = Expected regenerative energy │
                   │ Second electric energy = Available input electric energy │
                   └─────────────┬────────────────────┘       │
                               │            ╭─S930            │
              ╱────────────────┴──────────────╲  NO           │
             ╱ First electric energy > Second electric energy? ╲──┼──▶ ┌────────┐
             ╲                                  ╱              │    │  End   │
              ╲──────────────┬─────────────────╱              │    └────────┘
                          YES│                                 │
                   ┌─────────┴───────┐
                   │      S660        │
                   └─────────────────┘
```

FIG. 10

FIG. 11

S660

S1110

Determine a plurality of remaining electric energy values respectively associated with
a plurality of chargers/dischargers having remaining charging period

S1120

Select at least one remaining electric energy value whose sum by adding the plurality of
remaining electric energy values in descending order is equal to or larger than deficit electric energy value

S1130

Stop charger/discharger associated with each selected remaining electric energy value

End

FIG. 12

EP 4 738 642 A1

FIG. 13

29

FIG. 14

S660

S1410

Determine a plurality of remaining electric energy values respectively associated with a plurality of chargers/dischargers having remaining discharging period

S1420

Select at least one remaining electric energy value whose sum by adding the plurality of remaining electric energy values in descending order is equal to or larger than surplus electric energy value

S1430

Stop charger/discharger associated with each selected remaining electric energy value

End

FIG. 15

FIG. 16

# INTERNATIONAL SEARCH REPORT

| International application No. |
|---|
| **PCT/KR2025/003128** |

| A. | CLASSIFICATION OF SUBJECT MATTER |
|---|---|

**H02J 7/00**(2006.01)i; **H02J 9/02**(2006.01)i; **H01M 10/42**(2006.01)i

According to International Patent Classification (IPC) or to both national classification and IPC

| B. | FIELDS SEARCHED |
|---|---|

Minimum documentation searched (classification system followed by classification symbols)

H02J 7/00(2006.01); G01R 19/165(2006.01); G01R 31/371(2019.01); G01R 31/382(2019.01); G01R 31/3842(2019.01); H01M 10/42(2006.01); H02J 1/00(2006.01); H02J 3/32(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 배터리(battery), 충전(charging), 방전(discharging), 에너지 저장 시스템(energy storage system), 전력 프로파일(power profile)

| C. | DOCUMENTS CONSIDERED TO BE RELEVANT |
|---|---|

| Category* | Citation of document, with indication, where appropriate, of the relevant passages | Relevant to claim No. |
|---|---|---|
| X | KR 10-2022-0065600 A (LG ENERGY SOLUTION, LTD.) 20 May 2022 (2022-05-20)<br>See paragraphs [0037]-[0038], [0040], [0044]-[0047] and [0051]-[0084]; and figures 1-2 and 6. | 1,4,8,12-15 |
| A | | 2-3,5-7,9-11 |
| A | KR 10-2023-0140178 A (GREENBASE) 06 October 2023 (2023-10-06)<br>See paragraphs [0041]-[0066]. | 1-15 |
| A | JP 2021-190159 A (SOFT ENERGY CONTROLS INC.) 13 December 2021 (2021-12-13)<br>See paragraphs [0013]-[0025]. | 1-15 |
| A | KR 10-2022-0160825 A (PMGROW CORPORATION) 06 December 2022 (2022-12-06)<br>See paragraphs [0029]-[0062]. | 1-15 |
| A | US 2021-0066929 A1 (TDK CORPORATION) 04 March 2021 (2021-03-04)<br>See claims 1-2. | 1-15 |

☐ Further documents are listed in the continuation of Box C.  ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **10 June 2025** | **10 June 2025** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

### INTERNATIONAL SEARCH REPORT
**Information on patent family members**

International application No.

**PCT/KR2025/003128**

| Patent document cited in search report | | | Publication date (day/month/year) | Patent family member(s) | | | Publication date (day/month/year) |
|---|---|---|---|---|---|---|---|
| KR | 10-2022-0065600 | A | 20 May 2022 | CN | 114946098 | A | 26 August 2022 |
| | | | | EP | 4075627 | A1 | 19 October 2022 |
| | | | | KR | 10-2654899 | B1 | 03 April 2024 |
| | | | | US | 12088103 | B2 | 10 September 2024 |
| | | | | US | 2023-0055592 | A1 | 23 February 2023 |
| | | | | WO | 2022-103183 | A1 | 19 May 2022 |
| KR | 10-2023-0140178 | A | 06 October 2023 | KR | 10-2712215 | B1 | 02 October 2024 |
| JP | 2021-190159 | A | 13 December 2021 | JP | 6841457 | B1 | 10 March 2021 |
| KR | 10-2022-0160825 | A | 06 December 2022 | | None | | |
| US | 2021-0066929 | A1 | 04 March 2021 | US | 11594883 | B2 | 28 February 2023 |
| | | | | WO | 2019-145997 | A1 | 01 August 2019 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 1020240038407

- KR 1020250026942